# EUROPÄISCHE PATENTSCHRIFT

(11) **EP 1 678 240 B1**
(45) Veröffentlichungstag und Bekanntmachung des Hinweises auf die Patenterteilung: **11.03.2009**
(21) Anmeldenummer: 04790971.8
(22) Anmeldetag: 28.10.2004
(51) Int. Cl.: C08G 77/30, C08G 77/395

(54) **VERFAHREN ZUR HERSTELLUNG VON MIT PHOSPHONSÄUREESTER MODIFIZIERTEN ORGANOSILOXANEN**
METHOD FOR THE PRODUCTION OF ORGANOSILOXANES MODIFIED BY A PHOSPHONIC ACID ESTER
PROCEDE DE PRODUCTION D'ORGANOSILOXANES MODIFIES AU MOYEN D'ESTERS DE L'ACIDE PHOSPHONIQUE

(30) Priorität: 06.11.2003 DE 10351803
(43) Veröffentlichungstag der Anmeldung: 12.07.2006
(73) Patentinhaber: Wacker Chemie AG, 81737 München (DE)
(72) Erfinder: SCHÄFER, Oliver, 84489 Burghausen (DE); LUCKAS, Hans-Joachim, 81377 München (DE)
(74) Vertreter: Budczinski, Angelika
(86) Internationale Anmeldenummer: PCT/EP2004/012201
(87) Internationale Veröffentlichungsnummer: WO 2005/047368

(56) Entgegenhaltungen:
- US-A- 2 768 193
- US-A- 2 843 615

## Beschreibung

Die Erfindung betrifft ein Verfahren zur Herstellung von mit Phosphonsäureester modifizierten siliciumorganischen Verbindungen durch Reaktion von Phosphonsäureestergruppen enthaltenen Silanen mit reaktiven Siliciumverbindungen.

Mit Phosphonsäureester modifizierte Silicone sind von großem wirtschaftlichen Interesse für eine Vielzahl von Bereichen. Beispielsweise können sie als Gleitmittel auf Metallen und Textilien, flammhemmende Zusätze, Haftvermittler, Zusätze für Kosmetika oder Waschmittel, Entschäumer, Trennmittel, Dämpfungsflüssigkeiten, Flüssigkeiten für Hitzeübertragungen, antistatische Mittel oder für Polituren und Beschichtungen eingesetzt werden.

Mit Phosphor modifizierte Siloxane werden im Allgemeinen durch Reaktion von Trialkylphosphiten mit Chlorpropyl-modifizierten Siloxanen dargestellt, wie beispielsweise in Gallagher et al., J. Polym. Sci. Part A, Vol. 41, 48-59 (2003), beschrieben. Unglücklicherweise werden bei dieser Reaktion lange Reaktionszeiten und hohe Temperaturen benötigt, was zu Umlagerungen im Produkt und damit zu Ausbeuteverlusten sowie ungewünschten Nebenprodukten führt.

Die Reaktion von Trialkylphosphiten mit Chlormethyl-modifizierten Siloxanen wie in der Patentschrift US 2,768,193 oder von Gallagher et al. beschrieben, geht deutlich schneller, hat jedoch den Nachteil, dass die so hergestellten Siloxane wegen ihres hohen Siedepunktes nur schwer destillativ gereinigt werden können. Jedoch verläuft auch diese Umsetzung langsam, da die Konzentration der reaktiven Gruppen durch Verdünnung mit unreaktiven Dimethylsiloxy-Einheiten stark reduziert ist, wodurch Reaktionszeiten im Bereich von mehreren Stunden resultieren.

Die der Erfindung zugrunde liegende Aufgabe war es nun, ein Verfahren zur Herstellung von mit Phosphonsäureester modifizierten Organosiloxanen zur Verfügung zu stellen, mit dem ausgehend von kommerziell zugänglichen Chemikalien die mit Phosphonsäureester modifizierten Organosiloxane möglichst einfach, mit kurzen Reaktionszeiten und in hohen Ausbeuten herstellbar sind.

Gegenstand der Erfindung ist ein Verfahren zur Herstellung von mit Phosphonsäureester modifizierten Organosiloxanen der allgemeinen Formel

(R₂SiO_{2/2})ₚ(R₃SiO_{1/2})_{q}[O_{1/2}H]ₜ[(O_{f/2}R¹_{3-f}SiCR²₂P(O)(OR⁴)₂]ₛ (I)

,
worin
- **R**: ein Wasserstoffatom oder einen monovalenten gegebenenfalls mit -CN, -NCO, -NR⁵₂, -COOH, -COOR⁵, -Halogen, -Acryl, -Epoxy, -SH, -OH oder -CONR⁵₂ substituierten Si-C-gebundenen C₁-C₂₀-Kohlenwasserstoffrest oder C₁-C₁₅-Kohlenwasserstoffoxyrest, in denen jeweils eine oder mehrere, einander nicht benachbarte Methyleneinheiten durch Gruppen -O-, -CO-, -COO-, -OCO- oder -OCOO-, -S- oder -NR⁵- ersetzt sein können und in denen eine oder mehrere, einander nicht benachbarte Methineinheiten durch Gruppen, -N=, -N=N- oder -P= ersetzt sein können,
- R¹: ein Wasserstoffatom oder einen monovalenten gegebenenfalls mit -CN, -NCO, -COOH, -COOR⁵, -Halogen, -Acryl, -SH, -OH oder -CONR⁵₂ substituierten Si-C-gebundenen C₁-C₂₀-Kohlenwasserstoffrest oder C₁-C₁₅-Kohlenwasserstoffoxyrest, in denen jeweils eine oder mehrere, einander nicht benachbarte Methyleneinheiten durch Gruppen -O-, -CO-, -COO-, -OCO-, oder -OCOO-, -S-, oder -NR⁵- ersetzt sein können und in denen eine oder mehrere, einander nicht benachbarte Methineinheiten durch Gruppen, -N=, -N=N- oder -P= ersetzt sein können,
- **R²**: Wasserstoff oder einen gegebenenfalls mit -CN oder Halogen substituierten C₁-C₂₀-Kohlenwasserstoffrest,
- **R⁴**: Wasserstoff oder einen gegebenenfalls mit -CN oder Halogen substituierten C₁-C₂₀-Kohlenwasserstoffrest oder substituierte oder unsubstituierte Polyalkylenoxide mit 1 bis 4000 C-Atomen,
- **R⁵**: Wasserstoff oder einen gegebenenfalls mit -CN oder Halogen substituierten C₁-C₁₀-Kohlenwasserstoffrest,
- **p**: 0 oder eine ganze Zahl von 1 bis 100 000,
- **q**: 0 oder eine ganze Zahl von 1 bis 100 000 ,
- **f**: die Zahl 1 oder 2 oder 3,
- **s**: eine ganze Zahl von mindestens 1 und
- **t**: 0 oder eine ganze Zahl von mindestens 1 bedeuten, wobei
- **p+q**: eine ganze Zahl von mindestens 1 ist,
dadurch gekennzeichnet, dass
mindestens ein Silan der Formel

[(R³O)_{f}R¹_{3-f}SiCR²₂P(O)(OR⁴)₂] (III)

mit mindestens einer Siliciumverbindung der allgemeinen Formel

(R₂SiO_{2/2})ₚ(R₃SiO_{1/2})_{q}[O_{1/2}H]ₘ (IV)

zur Reaktion gebracht werden,
wobei
- **R³**: Wasserstoff oder einen gegebenenfalls mit -CN oder Halogenatom substituierten C₁-C₂₀-Kohlenwasserstoffrest bedeutet, und
- **m**: eine ganze Zahl von 1 oder 2 bedeutet,

**R, R¹, R², R⁴, p, q, f** und **s** die vorstehenden Bedeutungen aufweisen.

Die mit Phosphonsäureester modifizierten Organosiloxane der allgemeinen Formel (I) weisen eine Phosphonsäureesterfunktion auf, die über ein C-Atom durch eine Si-C-P-Bindung an ein Siliciumatom der Siliconverbindung gebunden sind.

Die Reste **R** können gleich oder verschieden, substituiert oder unsubstituiert, aliphatisch gesättigt oder ungesättigt, aromatisch, cyclisch, geradkettig oder verzweigt sein. **R** weist vorzugsweise 1 bis 12 Kohlenstoffatome, insbesondere 1 bis 6 Kohlenstoffatome auf, vorzugsweise unsubstituiert.

Vorzugsweise ist **R** ein geradkettiger oder verzweigter C₁-C₆-Alkylrest, wobei der Methyl-, Ethyl-, Phenyl-, Vinyl- und Trifluorpropylrest besonders bevorzugt sind.

Die Reste **R¹** können gleich oder verschieden, substituiert oder unsubstituiert, aliphatisch gesättigt oder ungesättigt, aromatisch, cyclisch, geradkettig oder verzweigt sein. **R¹** ist vorzugsweise ein C₁-C₁₀-Alkylrest oder Phenylrest, insbesondere verzweigter oder unverzweigter C₁-C₃-Alkylrest, der substituiert sein kann. Besonders bevorzugt ist **R¹** ein Methylrest oder Ethylrest.

Die Reste **R²** können unabhängig voneinander ebenfalls substituiert oder unsubstituiert, aliphatisch gesättigt oder ungesättigt, aromatisch, cyclisch, geradkettig oder verzweigt sein. **R²** ist vorzugsweise ein C₁-C₃-Alkylrest oder Wasserstoffatom. Besonders bevorzugt ist **R²** Wasserstoffatom.

Die Reste **R³** können unabhängig voneinander ebenfalls substituiert oder unsubstituiert, aliphatisch gesättigt oder ungesättigt, aromatisch, cyclisch, geradkettig oder verzweigt sein. **R³** ist vorzugsweise ein C₁-C₅-Alkylrest oder Wasserstoffatom, insbesondere C₁-C₃-Alkylrest oder Wasserstoffatom. Besonders bevorzugt ist **R³** ein Methyl- oder Ethylrest.

Die Reste **R⁴** können unabhängig voneinander ebenfalls substituiert oder unsubstituiert, aliphatisch gesättigt oder ungesättigt, aromatisch, cyclisch, geradkettig oder verzweigt sein. **R⁴** ist vorzugsweise ein C₁-C₁₂-Alkyl- oder Arylrest. Besonders bevorzugt ist **R⁴** ein Methyl-,Ethyl-, Butyl-, Phenyl- oder Cyclohexylrest. **R⁴** kann gegebenenfalls noch Heteroatome wie beispielsweise Sauerstoffatom oder Stickstoffatom oder andere funktionelle Gruppen enthalten.

Die Reste **R⁵** sind vorzugsweise Wasserstoffatom oder ein unsubstituierter oder substituierter C₁-C₁₀-Alkylrest.

Vorzugsweise ist **p** eine ganze Zahl von 3 bis 1000, insbesondere von 5 bis 500.

Vorzugsweise bedeutet **m** 1 oder 2, insbesondere 2.

Vorzugsweise ist **q** 0 oder 2.

Vorzugsweise ist **s** eine ganze Zahl von 1 bis 50, insbesondere von 2 bis 10.

Vorzugsweise ist **t** 0, 1, 2 oder 3, insbesondere 0, 1 oder 2.

Vorzugsweise ist die Summe **p** + **q** eine ganze Zahl von mindestens 2, insbesondere mindestens 3.

Beispiele für die erfindungsgemäß eingesetzten Silane der Formel (III) sind H₃COSi(CH₃)₂CH₂PO(OC₂H₅)₂,
(H₃CO)₂Si(CH₃)CH₂PO(OC₂H₅)₂, (H₃CO)₃SiCH₂PO(OC₂H₅)₂,
(H₅C₂O)Si(CH₃)₂CH₂PO(OC₂H₅)₂, (H₅C₂O)₂Si(CH₃)CH₂PO(OC₂H₅)₂,
(H₅C₂O)₃SiCH₂PO(OC₂H₅)₂, H₃COSi(CH₃)₂CH₂PO(OCH₃)₂,
(H₃CO)₂Si(CH₃)CH₂PO(OCH₃)₂, (H₃CO)₃SiCH₂PO(OCH₃) ₂,
(H₅C₂O)Si(CH₃)₂CH₂PO(OCH₃), (H₅C₂O)₂Si(CH₃)CH₂PO(OCH₃)₂ und
(H₅C₂O)₃SiCH₂PO(OCH₃)₂.

Bevorzugt handelt es sich bei den erfindungsgemäß eingesetzten Silanen der Formel (III) um H₃COSi(CH₃)₂CH₂PO(OC₂H₅)₂,
(H₃CO)₂Si(CH₃)CH₂PO(OC₂H₅)₂, (H₃CO)₃SiCH₂PO(OC₂H₅)₂,
(H₅C₂O)Si(CH₃)₂CH₂PO(OC₂H₅)₂, (H₅C₂O)₂Si(CH₃)CH₂PO(OC₂H₅)₂,
(H₅C₂O)₃SiCH₂PO(OC₂H₅)₂, wobei H₃COSi(CH₃)₂CH₂PO(OC₂H₅)₂,
(H₃CO)₂Si(CH₃)CH₂PO(OC₂H₅)₂, (H₅C₂O)Si(CH₃)₂CH₂PO(OC₂H₅)₂ und
(H₅C₂O)₂Si(CH₃)CH₂PO(OC₂H₅)₂ besonders bevorzugt sind.

Die erfindungsgemäß eingesetzten Silane der Formel (III) sind handelsübliche Produkte bzw. können nach in der Siliciumchemie bekannten Verfahren hergestellt werden. So können die eingesetzten Alkoxysilane der allgemeinen Formel (III) einfach und in hohen Ausbeuten durch Umsetzung der entsprechenden Chloralkyl(alkoxy)silane mit Trialkylphosphiten hergestellt werden, wie es beispielsweise in der Patentschrift US 2,7681,93 beschrieben wird.

Beispiele für die erfindungsgemäß eingesetzten Siliciumverbindungen der Formel (IV) sind [(H₃C)₂SiO_{2/2}]₁₅[O_{1/2}H]₂,
[(H₃C)₂SiO_{2/2}]₃₀[O_{1/2}H]₂, [(H₃C)₂SiO_{2/2}]₅₅[O_{1/2}H]₂,
[(H₃C)₂SiO_{2/2}]₁₅₀[O_{1/2}H]₂, [(H₃C)₃SiO_{1/2}][(H₃C)₂SiO_{2/2}]₂₀[O_{1/2}H],
[(H₃C)₃SiO_{1/2}][(H₃C)₂SiO_{2/2}]₅₀[O_{1/2}H], [(H₃C)(H₅C₆)SiO_{2/2}]₁₅[O_{1/2}H]₂,
[(H₃C)(H₅C₆)SiO_{2/2}]₃₅[O_{1/2}H]₂, [(H₅C₆)₂SiO_{2/2}]₂₅[O_{1/2}H]₂,
[(H₃C)(F₃H₄C₃)SiO_{2/2}]₂₀[O_{1/2}H]₂, [(H₃C)(H₃C₂)SiO_{2/2}]₂₀[O_{1/2}H]₂ und
[(H₃C)(H)SiO_{2/2}]₃₀[O_{1/2}H]₂.

Bevorzugt handelt es sich bei den erfindungsgemäß eingesetzten Siliciumverbindungen der Formel (IV) um [(H₃C)₂SiO_{2/2}]₁₅[O_{1/2}H]₂,
[(H₃C)₂SiO_{2/2}]₃₀[O_{1/2}H]₂, [(H₃C)₂SiO_{2/2}]₅₅[O_{1/2}H]₂,
[(H₃C)₂SiO_{2/2}]₁₅₀[O_{1/2}H]₂, [(H₃C)₃SiO_{1/2}][(H₃C)₂SiO_{2/2}]₂₀[O_{1/2}H] und
[(H₃C)₃SiO_{1/2}][(H₃C)₂SiO_{2/2}]₅₀[O_{1/2}H], wobei [(H₃C)₂SiO_{2/2}]₁₅[O_{1/2}H]₂,
[(H₃C)₂SiO_{2/2}]₃₀[O_{1/2}H]₂ und [(H₃C)₂SiO_{2/2}]₅₅[O_{1/2}H]₂ besonders bevorzugt sind.

Die erfindungsgemäß eingesetzten Siliciumverbindungen der Formel (IV) sind handelsübliche Produkte bzw. können nach in der Siliciumchemie bekannten Verfahren hergestellt werden.

Bei dem erfindungsgemäßen Verfahren wird Siliciumverbindung der Formel (III) in Mengen von bevorzugt 0,5 bis 80 Gewichtsteilen, besonders bevorzugt von 2 bis 50 Gewichtsteilen, jeweils bezogen auf 100 Gewichtsteile der Verbindung der allgemeinen Formel (IV), eingesetzt.

Bei dem erfindungsgemäßen Verfahren werden Silane der allgemeinen Formel (III) mit Siliciumverbindungen der allgemeinen Formel (IV) umgesetzt. Dabei kann die Reaktion unter milden Bedingungen stattfinden, die eine Reaktion einer Si-OH-Gruppe am Siloxan der allgemeinen Formel (IV) mit dem Silan der allgemeinen Formel (III) stattfinden lässt, ohne dass Si-O-Si-Bindungen des Siloxans der Formel (IV) gebrochen und ggf. neu geknüpft werden. Dabei kann vorteilhafterweise z.T. auf die Verwendung spezieller Katalysatoren verzichtet werden. Die erfindungsgemäße Reaktion verläuft jedoch unter Verwendung von Katalysatoren, insbesondere solchen, die nach dem Stand der Technik zur Herstellung von Alkoxy-terminierten Siloxanen oder zur Beschleunigung der Reaktion von Alkoxysilanen, beispielsweise in RTV-1 Massen, verwendet werden, schneller und vollständiger. Es können jedoch auch andere Katalysatoren, wie z.B. Phosphorsäuren oder teilveresterte Phosphorsäuren wie z.B. Isopropylphosphat verwendet werden.

Falls bei dem erfindungsgemäßen Verfahren Katalysator eingesetzt wird, handelt es sich um Mengen von bevorzugt 0,0005 bis 10 Gewichtsteilen, besonders bevorzugt um 0,005 bis 2 Gewichtsteile, jeweils bezogen auf 100 Gewichtsteile der Verbindung der allgemeinen Formel (IV).

Bevorzugt wird das erfindungsgemäße Verfahren bei Temperaturen von 0 bis 200°C, besonders bevorzugt von 30 bis 100°C, durchgeführt.

Bevorzugt wird das erfindungsgemäße Verfahren bei einem Druck von 0,01 bis 2000 hPa, besonders bevorzugt beim Druck der umgebenden Atmosphäre, also etwa 900 bis 1100 hPa, durchgeführt. Gegebenenfalls können Schutzgase wie z.B. Stickstoff, Edelgase oder Kohlendioxid verwendet werden. Der Sauerstoffgehalt der umgebenden Atmosphäre sollte vorteilhafterweise in den Grenzen von 0 bis 30 Vol.-% gehalten werden. Die Erzeugung explosionsfähiger Gemische sollte aus sicherheitstechnischen Gründen vermieden werden.

Bei der erfindungsgemäßen Umsetzung entstehende Spaltprodukte, wie z.B. Alkohol, können während oder nach der Umsetzung von der Reaktionsmischung auf bekannte Art und Weise entfernt werden, wie beispielsweise destillativ unter vermindertem Druck bei Raumtemperatur oder bei erhöhter Temperatur.

Das erfindungsgemäße Verfahren kann sowohl unter Einbeziehung von Lösungsmitteln durchgeführt werden oder aber auch ohne die Verwendung von Lösungsmitteln, wobei die Reaktion ohne zusätzliche Lösungsmittel bevorzugt ist.

Falls beim erfindungsgemäßen Verfahren Lösungsmittel eingesetzt werden, handelt es sich bevorzugt um inerte, insbesondere aprotische, Lösungsmittel wie aliphatische Kohlenwasserstoffe, wie beispielsweise Heptan oder Decan und aromatische Kohlenwasserstoffe wie beispielsweise Toluol oder Xylol. Ebenfalls können Ether wie Tetrahydrofuran (THF), Diethylether, tert.-Butylmethylether (MTBE) oder Ketone wie Aceton oder 2-Butanon (MEK) verwendet werden. Falls bei dem erfindungsgemäßen Verfahren Lösungsmittel eingesetzt werden, handelt es sich besonders bevorzugt um organische Lösungsmittel oder Lösungsmittelgemische mit einem Siedepunkt bzw. Siedebereich von bis zu 150°C bei 1000 hPa.

Die Menge und Art des Lösungsmittels wird bevorzugt so gewählt, dass eine ausreichende Homogenisierung der Reaktionsmischung gewährleistet wird.

Das erfindungsgemäße Verfahren wird bevorzugt in Schutzgasatmosphäre durchgeführt, wie z.B. unter Stickstoff.

Bei den im erfindungsgemäßen Verfahren eingesetzten Komponenten kann es sich jeweils um eine Art einer solchen Komponente wie auch um ein Gemisch aus mindestens zwei Arten einer jeweiligen Komponente handeln.

Das erfindungsgemäße Verfahren kann diskontinuierlich oder kontinuierlich in jeweils dafür geeigneten Reaktoren durchgeführt werden.

Nach dem erfindungsgemäßen Verfahren werden je nach Bedingungen cyclische, lineare oder verzweigte Produkte erhalten, die je nach Gehalt an Phosphonsäureestergruppen Löslichkeiten in unterschiedlichen Lösungsmitteln zeigen. Dabei steigt mit zunehmendem Gehalt an Phosphonsäureestergruppen im Siloxan die Löslichkeit in polaren Lösungemitteln an. Die Emulgierbarkeit in Wasser ist deutlich erhöht. Bei der Herstellung von Emulsionen können gegebenenfalls zusätzliche Emulgatoren nach dem Stand der Technik verwendet werden, wobei diese entweder ionische oder nicht-ionische Emulgatoren sein können. Die Verbindungen der allgemeinen Formel (I), welche durch das erfindungsgemäße Verfahren hergestellt werden, bilden aber auch ohne den Einsatz von zusätzlichen Emulgatoren stabile Emulsionen in Wasser. Dies ist vor allem im Textil- und Kosmetikbereich von Interesse.

Die erfindungsgemäß hergestellten Produkte werden in hohen Ausbeuten, bevorzugt größer 90 %, erhalten.

Die erfindungsgemäß hergestellten Produkte können für alle Zwecke eingesetzt werde, für die auch bisher mit Phosphonsäureester modifizierte Siloxane eingesetzt worden sind, wie z.B. Beschichtungen von z.B. Textilien oder Kunststoffen oder als Additive im Kunststoff- oder Kosmetikbereich.

Das erfindungsgemäße Verfahren hat den Vorteil, dass es einfach in der Durchführung ist und das Reaktionsprodukt keinen weiteren aufwändigen Reinigungsprozesse mehr durchlaufen muss.

Das erfindungsgemäße Verfahren hat den Vorteil, dass keine weiteren niedermolekularen cyclischen Siloxanverbindungen entstehen, die aufwändig abdestilliert werden müssen.

Das erfindungsgemäße Verfahren hat weiterhin den Vorteil, dass kurze Reaktionszeiten erreichbar sind und dass die verwendeten Edukte in einer ausreichenden Reinheit zur Verfügung stehen und die Umsetzung zum Endprodukt in Ausbeuten von besonders bevorzugt > 95 % erfolgt und somit keine weiteren Verunreinigungen entfernt werden müssen.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanden bei Raumtemperatur ohne zusätzliche Heizung oder Kühlung einstellt, durchgeführt.

### Herstellung von Diethoxy-phosphorigester-methyl-dimethoxymethylsilan (Silan A)

In einem 250-ml-Dreihalskolben mit Tropftrichter und Rückflusskühler wurden unter Stickstoffatmosphäre 99,7 g (0,6 mol) Triethylphosphit (P(OEt)₃, Aldrich, GC 98%) vorgelegt. Nach Aufheizen auf 140°C wurden unter kräftigem Rühren innerhalb von 3 Stunden 46,4 g Chlormethyldimethoxymethylsilan (0,3 mol) (käuflich erhältlich bei der Wacker-Chemie GmbH, München) langsam zugetropft. Anschließend wurde die Reaktionsmischung noch 30 Minuten auf 170°C aufgeheizt. Nach Abziehen des überschüssigen Triethylphosphits im Vakuum wurde bei einer Temperatur von 133°C und einem Vakuum von 12 mbar 58,6 g Diethoxy-phosphorigester-methyl-dimethoxymethylsilan (0,23 mol, GC 98 %, Ausbeute: 76 % d. Th.) abdestilliert.

### Herstellung von Diethoxy-phosphorigester-methyl-dimethylmethoxysilan (Silan B)

In einem 250-ml-Dreihalskolben mit Tropftrichter und Rückflusskühler wurden unter Stickstoffatmosphäre 124,5 g (0,75 mol) Triethylphosphit (P(OEt)₃, Aldrich, GC 98%) vorgelegt. Nach Aufheizen auf 140°C wurden unter kräftigem Rühren innerhalb von 2,5 Stunden 69,3g Chlormethyldimethylmethoxylsilan (0,5 mol) (käuflich erhältlich bei der Wacker-Chemie GmbH, München) langsam zugetropft. Anschließend wurde die Reaktionsmischung noch 30 Minuten auf 170°C aufgeheizt. Nach Abziehen des überschüssigen Triethylphosphits im Vakuum wurde bei einer Temperatur von 118 - 122°C und einem Vakuum von 11 mbar 100,4 g Diethoxy-phosphorigester-methyl-dimethylmethoxysilan (0,42 mol, GC 98,2 %, Ausbeute: 83,6 % d. Th.) abdestilliert.

### Herstellung von Diethoxy-phosphorigester-methyl-trimethoxysilan (Silan C)

In einem 250-ml-Dreihalskolben mit Tropftrichter und Rückflusskühler wurden unter Stickstoffatmosphäre 112,2 g (0,675 mol) Triethylphosphit (P(OEt)₃, Aldrich, GC 98%) vorgelegt. Nach Aufheizen auf 140°C wurden unter kräftigem Rühren innerhalb von 2,5 Stunden 76,8 g Chlormethyltrimethoxysilan (0,45 mol) (käuflich erhältlich bei der Wacker-Chemie GmbH, München) langsam zugetropft. Anschließend wurde die Reaktionsmischung noch 30 Minuten auf 170°C aufgeheizt. Nach Abziehen des überschüssigen Triethylphosphits im Vakuum wurde bei einer Temperatur von 135 - 138°C und einem Vakuum von 12 mbar 105,6 g Diethoxy-phosphorigester-methyl-trimethoxysilan (0,39 mol, GC 97,4 %, Ausbeute: 86,2 % d. Th.) abdestilliert.

### Beispiel 1

In einem 500-ml-Dreihalskolben mit Tropftrichter und Rückflusskühler wurden unter Stickstoffatmosphäre 26,1 g Diethoxy-phosphorigestermethyl-dimethoxymethylsilan (0,10 mol, GC 98%), dessen Herstellung oben unter "Silan A" beschrieben ist, vorgelegt. Nach Zugabe von 0,5 Gew.-% Isopropylphosphat als Katalysator und Aufheizen auf 60°C wurden unter kräftigem Rühren innerhalb von 10 Minuten 220 g eines beidseitig OH-terminierten Polydimethylsiloxans (M=1100 g/mol; 0,2 mol) langsam zugetropft. Anschließend wurde die Reaktionsmischung noch 120 Minuten auf 80°C aufgeheizt. Nach Abziehen des entstandenen Alkohols im Vakuum erhielt man 239 g Poly-((diethoxy-phosphorigestermethyl)-methylsiloxan-co-dimethysiloxan) mit einem durchschnittlichen Molekulargewicht (Zahlenmittel) von 2500 g/mol. Es handelt sich dabei um ein lineares Blockcopolymer, bei dem zwei Polydimethylsiloxan-Ketten über eine Diethoxy-phosphorigestermethyl)-methylsiloxan-Einheit verbunden sind.

### Beispiel 2

In einem 250-ml-Dreihalskolben mit Tropftrichter und Rückflusskühler wurden unter Stickstoffatmosphäre 48,9 g Diethoxy-phosphorigestermethyl-dimethylmethoxysilan (0,20 mol, GC 98%), dessen Herstellung oben unter "Silan B" beschrieben ist, vorgelegt. Nach Zugabe von 0,5 Gew.-% Isopropylphosphat als Katalysator und Aufheizen auf 60°C wurden unter kräftigem Rühren innerhalb von 10 Minuten 110 g eines beidseitig OH-terminierten Polydimethylsiloxans (M=1100 g/mol; 0,1 mol) langsam zugetropft. Anschließend wurde die Reaktionsmischung noch 120 Minuten auf 80°C aufgeheizt. Nach Abziehen des entstandenen Alkohols im Vakuum erhielt man 153 g eines Polydimethylsiloxan mit Diethoxy-phosphorigestermethyl-Endgruppen und mit einem durchschnittlichen Molekulargewicht (Zahlenmittel) von 1500 g/mol. Es handelt sich dabei um ein lineares Blockcopolymer, bei dem an den beiden Enden einer Polydimethylsiloxan-Kette je eine Diethoxy-phosphorigestermethyl)-methylsiloxan-Einheit verbunden ist.

### Beispiel 3

In einem 500-ml-Dreihalskolben mit Tropftrichter und Rückflusskühler wurden unter Stickstoffatmosphäre 48,9 g Diethoxy-phosphorigestermethyl-dimethylmethoxysilan (0,20 mol, GC 98%), dessen Herstellung oben unter "Silan B" beschrieben ist, vorgelegt. Nach Zugabe von 0,5 Gew.-% Isopropylphosphat als Katalysator und Aufheizen auf 60°C wurden unter kräftigem Rühren innerhalb von 10 Minuten 300 g eines beidseitig OH-terminierten Polydimethylsiloxans (M=3000 g/mol; 0,1 mol) langsam zugetropft. Anschließend wurde die Reaktionsmischung noch 240 Minuten auf 80°C aufgeheizt. Nach Abziehen des entstandenen Alkohols im Vakuum erhielt man 343 g eines Polydimethylsiloxan mit Diethoxy-phosphorigestermethyl-Endgruppen und mit einem durchschnittlichen Molekulargewicht (GPC, Zahlenmittel) von 3600 g/mol. Es handelt sich dabei um ein lineares Blockcopolymer, bei dem an den beiden Enden einer Polydimethylsiloxan-Kette je eine Diethoxy-phosphorigestermethyl)-methylsiloxan-Einheit verbunden ist.

### Beispiel 4

In einem 250-ml-Dreihalskolben mit Tropftrichter und Rückflusskühler wurden unter Stickstoffatmosphäre 4,9 g Diethoxy-phosphorigestermethyl-dimethylmethoxysilan (0,02 mol, GC 98%), dessen Herstellung oben unter "Silan B" beschrieben ist, vorgelegt. Nach Zugabe von 0,5 Gew.-% Isopropylphosphat als Katalysator und Aufheizen auf 60°C wurden unter kräftigem Rühren innerhalb von 10 Minuten 108 g eines beidseitig OH-terminierten Polydimethylsiloxans (M=10800 g/mol; 0,01 mol) langsam zugetropft. Anschließend wurde die Reaktionsmischung noch 300 Minuten auf 80°C aufgeheizt. Nach Abziehen des entstandenen Alkohols im Vakuum erhielt man 110 g eines Polydimethysiloxan mit Diethoxy-phosphorigestermethyl-Endgruppen und mit einem durchschnittlichen Molekulargewicht (GPC, Zahlenmittel) von 12300 g/mol. Es handelt sich dabei um ein lineares Blockcopolymer, bei dem an den beiden Enden einer Polydimethylsiloxan-Kette je eine Diethoxy-phosphorigestermethyl)-methylsiloxan-Einheit verbunden ist.

### Beispiel 5

In einem 250-ml-Dreihalskolben mit Tropftrichter und Rückflusskühler wurden unter Stickstoffatmosphäre 26,1 g Diethoxy-phosphorigestermethyl-dimethoxymethylsilan (0,10 mol, GC 98%), dessen Herstellung oben unter "Silan B" beschrieben ist, vorgelegt. Nach Zugabe von 0,5 Gew.-% Isopropylphosphat als Katalysator und Aufheizen auf 60°C wurden unter kräftigem Rühren innerhalb von 10 Minuten 110 g eines beidseitig OH-terminierten Polydimethylsiloxans (M=1100 g/mol; 0,1 mol) langsam zugetropft. Anschließend wurde die Reaktionsmischung noch 120 Minuten auf 80°C aufgeheizt. Nach Abziehen des entstandenen Alkohols im Vakuum erhielt man 121 g eines Polydimethysiloxan mit Diethoxy-phosphorigestermethyl-Gruppen und mit einem durchschnittlichen Molekulargewicht (Zahlenmittel) von 10060 g/mol. Es handelt sich dabei um ein lineares Blockcopolymer, bei dem in einer langen Polydimethylsiloxan-Kette periodisch eine Diethoxy-phosphorigestermethyl)-methylsiloxan-Einheit eingebaut ist.

### Beispiel 6

In einem 250-ml-Dreihalskolben mit Tropftrichter und Rückflusskühler wurden unter Stickstoffatmosphäre 4,9 g Diethoxy-phosphorigestermethyl-dimethylmethoxysilan (0,02 mol, GC 98%), dessen Herstellung oben unter "Silan B" beschrieben ist, vorgelegt. Nach Zugabe von 0,5 Ges.-% eines teilveresterten Phosphorsäureester mit Polyalkylenoxid-Einheiten (käuflich erhältlich unter der Marke ARLYPON® bei der Fa. Cognis) als Katalysator und Aufheizen auf 60°C wurden unter kräftigem Rühren innerhalb von 10 Minuten 108 g eines beidseitig OH-terminierten Polydimethylsiloxans (M=10800 g/mol; 0,01 mol) langsam zugetropft. Anschließend wurde die Reaktionsmischung noch 300 Minuten auf 80°C aufgeheizt. Nach Abziehen des entstandenen Alkohols im Vakuum erhielt man 110 g eines Polydimethysiloxan mit Diethoxy-phosphorigestermethyl-Endgruppen und mit einem durchschnittlichen Molekulargewicht (GPC, Zahlenmittel) von 10900 g/mol. Es handelt sich dabei um ein lineares Blockcopolymer, bei dem an den beiden Enden einer Polydimethylsiloxan-Kette je eine Diethoxy-phosphorigestermethyl)-methylsiloxan-Einheit verbunden ist.

### Beispiel 7

In einem 500-ml-Dreihalskolben mit Tropftrichter und Rückflusskühler wurden unter Stickstoffatmosphäre 27,6 g Diethoxy-phosphorigestermethyl-trimethoxysilan (0,1 mol, GC 98%), dessen Herstellung oben unter "Silan C" beschrieben ist, vorgelegt. Nach Zugabe von 0,5 Gew.-% Isopropylphosphat als Katalysator und Aufheizen auf 60°C wurden unter kräftigem Rühren innerhalb von 10 Minuten 390 g eines einseitig OH-terminierten Polydimethylsiloxans (hergestellt durch anionische Polymerisation von D3-Cyclen, M=1300 g/mol; 0,3 mol) langsam zugetropft. Anschließend wurde die Reaktionsmischung noch 280 Minuten auf 80°C aufgeheizt. Nach Abziehen des entstandenen Alkohols im Vakuum erhielt man 308 g eines Polydimethysiloxan mit einer Diethoxy-phosphorigestermethyl-Gruppen und mit einem durchschnittlichen Molekulargewicht (GPC, Zahlenmittel) von 4200 g/mol. Es handelt sich dabei um ein sternförmiges Blockcopolymer, bei dem an einer Diethoxy-phosphorigestermethyl)-siloxan-Einheit in der Mitte drei Polydimethylsiloxan-Ketten angebunden sind.

### Beispiel 8

Zur Herstellung von Siloxan-Wasser Emulsionen wurden jeweils 30 g eines erfindungsgemäß funktionalisierten bzw. nicht-funktionalisierten Siloxans mit 70 ml Wasser versetzt und mit einem schnelllaufenden Rührer, einem sog. Ultra-Turrax für 30 Sekunden homogenisiert bzw. emulgiert. Man erhielt dabei jeweils milchige Systeme, bei denen die Zeit bis zur Entmischung gemessen wurde. Die Ergebnisse finden sich in Tabelle 1:

**Tabelle 1**

| **Siliconöl** | **Aussehen** | **Phasentrennung nach** |
|---|---|---|
| Beispiel 2 | Milchig | > 20 Tage |
| Bis-OH-terminiert (M = 1100 g/mol) | Milchig | 3 Tagen |
| Beispiel 3 | Milchig | 5 Tage |
| Bis-OH-terminiert (M = 3000 g/mol) | Milchig | 1 Tag |
| Beispiel 4 | Milchig | 3 Tage |
| Bis-OH-terminiert (M = 10800 g/mol) | Milchig | 1 Tag |

Es zeigte sich, dass die nach dem erfindungsgemäßen Verfahren hergestellten Verbindungen als Emulsion in Wasser eine deutlich höhere Stabilität aufweisen gegenüber den entsprechenden nichtfunktionellen Siliconölen mit gleichem Molekulargewicht.

## Patentansprüche

1. Verfahren zur Herstellung von mit Phosphonsäureester modifizierten Organosiloxanen der allgemeinen Formel
(R₂SiO_{2/2})ₚ(R₃SiO_{1/2})_{q}[O_{1/2}H]ₜ[(O_{f/2}R¹_{3-f}SiCR²₂P(O)(OR⁴)₂]ₛ (I)
,
worin
**R** ein Wasserstoffatom oder einen monovalenten gegebenenfalls mit -CN, -NCO, -NR⁵₂, -COOH, -COOR⁵, -Halogen, -Acryl, -Epoxy, -SH, -OH oder -CONR⁵₂ substituierten Si-C-gebundenen C₁-C₂₀-Kohlenwasserstoffrest oder C₁-C₁₅-Kohlenwasserstoffoxyrest, in denen jeweils eine oder mehrere, einander nicht benachbarte Methyleneinheiten durch Gruppen -O-, -CO-, -COO-, -OCO- oder -OCOO-, -S- oder -NR⁵- ersetzt sein können und in denen eine oder mehrere, einander nicht benachbarte Methineinheiten durch Gruppen -N=, -N=N- oder -P= ersetzt sein können,
**R¹** ein Wasserstoffatom oder einen monovalenten gegebenenfalls mit -CN, -NCO, -COOH, -COOR⁵, -Halogen, -Acryl, -SH, -OH oder -CONR⁵₂ substituierten Si-C-gebundenen C₁-C₂₀-Kohlenwasserstoffrest oder C₁-C₁₅-Kohlenwasserstoffoxyrest, in denen jeweils eine oder mehrere, einander nicht benachbarte Methyleneinheiten durch Gruppen -O-, -CO-, -COO-, -OCO-, oder -OCOO-, -S-, oder -NR⁵- ersetzt sein können und in denen eine oder mehrere, einander nicht benachbarte Methineinheiten durch Gruppen -N=, -N=N- oder -P= ersetzt sein können,
**R²** Wasserstoff oder einen gegebenenfalls mit -CN oder Halogen substituierten C₁-C₂₀-Kohlenwasserstoffrest,
**R⁴** Wasserstoff oder einen gegebenenfalls mit -CN oder Halogen substituierten C₁-C₂₀-Kohlenwasserstoffrest oder substituierte oder unsubstituierte Polyalkylenoxide mit 1 bis 4000 C-Atomen,
**R⁵** Wasserstoff oder einen gegebenenfalls mit -CN oder Halogen substituierten C₁-C₁₀-Kohlenwasserstoffrest,
**p** 0 oder eine ganze Zahl von 1 bis 100 000,
**q** 0 oder eine ganze Zahl von 1 bis 100 000 ,
**f** die Zahl 1 oder 2 oder 3,
**s** eine ganze Zahl von mindestens 1 und
**t** 0 oder eine ganze Zahl von mindestens 1 bedeuten, wobei
**p+q** eine ganze Zahl von mindestens 1 ist,
**dadurch gekennzeichnet, dass**
mindestens ein Silan der Formel
[(R³O)_{f}R¹_{3-f}SiCR²₂P(O)(OR⁴)₂] (III)
mit mindestens einer Siliciumverbindung der allgemeinen Formel
(R₂SiO_{2/2})ₚ(R₃SiO_{1/2})_{q}[O_{1/2}H]ₘ (IV)
zur Reaktion gebracht werden,
wobei
**R³** Wasserstoff oder einen gegebenenfalls mit -CN oder Halogenatom substituierten C₁-C₂₀-Kohlenwasserstoffrest bedeutet, und
**m** eine ganze Zahl von 1 oder 2 bedeutet,
**R, R¹, R², R⁴, p, q, f und s** die vorstehenden Bedeutungen aufweisen.

2. Verfahren gemäß Anspruch 1, **dadurch gekennzeichnet, dass** die Summe **p** + **q** eine ganze Zahl von mindestens 2 ist.

3. Verfahren gemäß Anspruch 1 oder 2, **dadurch gekennzeichnet, dass** es in Anwesenheit von Katalysator durchgeführt wird.

4. Verfahren gemäß einem oder mehreren der Ansprüche 1 bis 3, **dadurch gekennzeichnet, dass** es bei Temperaturen von 0 bis 200°C durchgeführt wird.

5. Verfahren gemäß einem oder mehreren der Ansprüche 1 bis 4, **dadurch gekennzeichnet, dass** es in Schutzgasatmosphäre durchgeführt wird.

## Claims

1. Method for the production of phosphonic ester-modified organosiloxanes of the general formula
(R₂SiO_{2/2})ₚ(R₃SiO_{1/2})_{q}[O_{1/2}H]ₜ[(O_{f/2}R¹_{3-f}SiCR²₂P(O)(OR⁴)₂]ₛ (I)
,
in which
**R** is a hydrogen atom or a monovalent, optionally -CN-, -NCO-, NR⁵₂-, -COOH-, -COOR⁵- , -halogen-, -acryloyl-, -epoxy-, -SH-, -OH- or -CONR⁵₂substituted Si-C-bonded C₁-C₂₀ hydrocarbon radical or C₁-C₁₅ hydrocarbonoxy radical in which one or more nonadjacent methylene units in each case may be replaced by groups -O-, -CO-, -COO-, -OCO- or -OCOO-, -S- or -NR⁵- and in which one or more nonadjacent methine units may be replaced by groups -N=, -N=N- or -P=,
**R¹** is a hydrogen atom or a monovalent, optionally -CN-, -NCO-, -COOH-, -COOR⁵-, -halogen-, -acryloyl, -SH-, -OH- or -CONR⁵₂-substituted Si-C-bonded C₁-C₂₀ hydrocarbon radical or C₁-C₁₅ hydrocarbonoxy radical in which one or more nonadjacent methylene units in each case may be replaced by groups -O-, -CO-, -COO-, -OCO-, or -OCOO-, -S-, or -NR⁵- and in which one or more nonadjacent methine units may be replaced by groups -N=, -N=N- or -P=,
**R²** is hydrogen or an optionally -CN- or halogen-substituted C₁-C₂₀ hydrocarbon radical,
**R⁴** is hydrogen or an optionally -CN- or halogen-substituted C₁-C₂₀ hydrocarbon radical or substituted or unsubstituted polyalkylene oxides having 1 to 4000 carbon atoms,
**R⁵** is hydrogen or an optionally -CN- or halogen-substituted C₁-C₁₀ hydrocarbon radical,
**p** is 0 or an integer of from 1 to 100 000,
**q** is 0 or an integer of from 1 to 100 000,
**f** is the number 1 or 2 or 3,
**s** is an integer which is at least 1 and
**t** is 0 or an integer which is at least 1,
**p+q** being an integer which is at least 1,
**characterized in that**
at least one silane of the formula
[(R³O)_{f}R¹_{3-f}SiCR²₂P(O)(OR⁴)₂] (III)
is reacted with at least one silicon compound of the general formula
(R₂SiO_{2/2})ₚ(R₃SiO_{1/2})_{q}[O_{1/2}H]ₘ (IV)
where
**R³** is hydrogen or an optionally -CN- or halogen-atom-substituted C₁-C₂₀ hydrocarbon radical, and
**m** is an integer 1 or 2,
**R, R¹, R², R⁴, p, q, f** and **s** have the above definitions.

2. Method according to claim 1, **characterized in that** the sum **p** + **q** is an integer which is at least 2.

3. Method according to claim 1 or 2, **characterized in that** it is carried out in the presence of catalyst.

4. Method according to one or more of claims 1 to 3, **characterized in that** it is carried out at temperatures of 0 to 200°C.

5. Method according to one or more of claims 1 to 4, **characterized in that** it is carried out in an inert gas atmosphere.

## Revendications

1. Procédé pour la préparation d'organosiloxanes modifiés par des esters de l'acide phosphonique de formule générale :
(R₂SiO_{2/2})ₚ(R₃SiO_{1/2})_{q}[O_{1/2}H]ₜ[(O_{f/2}R¹_{3-f}SiCR²₂P(O)(OR⁴)₂]ₛ (I)
où
R signifie un atome d'hydrogène ou un radical hydrocarboné en C₁-C₂₀ ou un radical hydrocarboné en C₁-C₁₅ à fonctionnalité oxy, monovalent, lié par SiC, le cas échéant substitué par -CN, -NCO, -NR⁵₂, -COOH, -COOR⁵, -halogène, -acryle, -époxy, -SH, -OH ou -CONR⁵₂, dans lequel à chaque fois une ou plusieurs unités méthylène non adjacentes peuvent être remplacées par des groupes -O-, -CO-, -COO-, -OCO- ou -OCOO-, -S-, ou -NR⁵- et dans lequel une ou plusieurs unités méthine non adjacentes peuvent être remplacées par des groupes -N=, -N=N- ou -P=,
R¹ signifie un atome d'hydrogène ou un radical hydrocarboné en C₁-C₂₀ ou un radical hydrocarboné en C₁-C₁₅ à fonctionnalité oxy, monovalent, lié par SiC, le cas échéant substitué par -CN, -NCO, -COOH, -COOR⁵, -halogène, -acryle, -SH, -OH ou -CONR⁵₂ dans lequel à chaque fois une ou plusieurs unités méthylène non adjacentes peuvent être remplacées par des groupes -O-, -CO-, -COO-, -OCO-ou -OCOO-, -S-, ou -NR⁵- et dans lequel une ou plusieurs unités méthine non adjacentes peuvent être remplacées par des groupes -N=, -N=N- ou -P=,
R² signifie hydrogène ou un radical hydrocarboné en C₁-C₂₀ le cas échéant substitué par -CN ou halogène,
R⁴ signifie hydrogène ou un radical hydrocarboné en C₁-C₂₀ le cas échéant substitué par -CN ou halogène ou un poly(oxyde d'alkylène) substitué ou non substitué comprenant 1 à 4000 atomes de carbone,
R⁵ signifie hydrogène ou un radical hydrocarboné en C₁-C₁₀ le cas échéant substitué par -CN ou halogène,
p vaut 0 ou un nombre entier de 1 à 100 000,
q vaut 0 ou un nombre entier de 1 à 100 000,
f vaut 1 ou 2 ou 3 ;
s vaut un nombre entier d'au moins 1, et
t vaut 0 ou un nombre entier d'au moins 1, p + q valant un nombre entier d'au moins 1,
**caractérisé en ce qu'**on fait réagir au moins un silane de formule
[(R³O)_{f}R¹_{3-f}SiCR²₂P(O)(OR⁴)₂] (III)
avec au moins un composé silicié de formule générale
(R₂SiO_{2/2})ₚ(R₃SiO_{1/2})_{q}[O_{1/2}H]ₘ (IV)
où
R³ signifie hydrogène ou un radical hydrocarboné en C₁-C₂₀ le cas échéant substitué par -CN ou un atome d'halogène,
et
m vaut un nombre entier de 1 ou 2,
R, R¹, R², R⁴, p, q, f et s présentent les significations susmentionnées.

2. Procédé selon la revendication 1, **caractérisé en ce que** la somme p + q vaut un nombre entier d'au moins 2.

3. Procédé selon la revendication 1 ou 2, **caractérisé en ce qu'**il est réalisé en présence d'un catalyseur.

4. Procédé selon l'une ou plusieurs des revendications 1 à 3, **caractérisé en ce qu'**il est réalisé à des températures de 0 à 200°C.

5. Procédé selon l'une ou plusieurs des revendications 1 à 4, **caractérisé en ce qu'**il est réalisé dans une atmosphère de gaz de protection.
